# FASCICULE DE BREVET EUROPEEN

(11) **EP 4 493 799 B1**
(45) Date de publication et mention de la délivrance du brevet: **11.11.2026**
(21) Numéro de dépôt: 23714250.0
(22) Date de dépôt: 16.03.2023
(51) Int. Cl.: F01D 25/18, F02C 7/06, F01D 25/12, F16C 37/00

(54) **LUBRIFICATION ET REFROIDISSEMENT D'UN EQUIPEMENT D'UNE TURBOMACHINE D'AÉRONEF**
SCHMIERUNG UND KÜHLUNG VON AUSRÜSTUNG EINER FLUGZEUGTURBOMASCHINE
LUBRICATION AND COOLING OF EQUIPMENT OF AN AIRCRAFT TURBOMACHINE

(30) Priorité: 17.03.2022 FR 2202369
(43) Date de publication de la demande: 22.01.2025
(73) Titulaire: Safran Helicopter Engines, 64510 Bordes (FR)
(72) Inventeur: FULLERINGER, Benjamin Nicolas, 77550 MOISSY-CRAMAYEL (FR); HERRAN, Nicolas Maurice Marcel, 77550 MOISSY-CRAMAYEL (FR)
(74) Mandataire: Gevers & Orès
(86) Numéro de dépôt international: PCT/FR2023/050374
(87) Numéro de publication internationale: WO 2023/175282

(56) Documents cités:
- EP-A1- 2 503 107
- FR-A1- 3 086 326
- FR-A1- 3 101 684
- FR-A1- 3 108 935

## Description

### Domaine technique de l'invention

La présente invention concerne le domaine général de l'aéronautique. Elle vise plus particulièrement une turbomachine d'aéronef dont un équipement est lubrifié et refroidi.

### Arrière-plan technique

L'arrière-plan technique comprend notamment les documents FR-A1-3 101 684, EP-A1-2 503 107, FR-A1-3 086 326 et FR-A1-3 108 935.

De manière conventionnelle, une turbomachine d'aéronef comprend un générateur de gaz comprenant au moins un compresseur, une chambre de combustion, et au moins une turbine.

Le générateur de gaz comporte en général un arbre de sortie pour l'entrainement d'un équipement, tel que par exemple une boite de transmission.

Dans la présente demande, on entend par « équipement », tout équipement apte à être accouplé à l'arbre de sortie du générateur de gaz et comportant au moins un rotor qui est guidé en rotation par au moins un palier à roulement. On entend par ailleurs par « palier à roulement », un palier qui comprend des éléments roulants, tels que des billes ou des rouleaux, typiquement montés entre deux bagues respectivement interne et externe.

Le générateur de gaz comprend un circuit de lubrification qui comporte en général un réservoir d'huile, une pompe et des canalisations ou gicleurs d'huile. Le circuit de lubrification du générateur de gaz permet par exemple de lubrifier les paliers à roulement du générateur de gaz. Il est également nécessaire de lubrifier les paliers à roulement de guidage du rotor de l'équipement.

Pour des raisons réglementaires, le circuit de lubrification du générateur de gaz ne peut pas toujours être utilisé pour lubrifier l'équipement qui doit alors être équipé d'un circuit de lubrification indépendant. C'est par exemple le cas d'une turbomachine pour hélicoptère. L'équipement comprend alors son propre circuit de lubrification qui est par exemple utilisé pour lubrifier les paliers de guidage de son rotor ainsi que des dentures d'engrenages le cas échéant. La circulation d'huile de lubrification permet de prélever des calories générées par les paliers et les éventuels engrènements lubrifiés et de les refroidir. En cas de dysfonctionnement ou d'interruption de la lubrification de l'équipement, les paliers ne sont plus refroidis et peuvent atteindre des températures importantes susceptibles de les détériorer. Ceci est d'autant plus vrai lorsque le rotor de l'équipement tourne à des hautes vitesses, typiquement supérieures ou égales à 25.000 tours/minutes.

Il est donc nécessaire de prévoir un système de refroidissement des paliers de l'équipement, qui puisse assurer ce refroidissement même en cas de dysfonctionnement du circuit de lubrification de l'équipement.

Dans la technique actuelle, on a déjà proposé de provisionner des gardes d'huile pendant le vol par les gicleurs ou le brouillard et servant à la lubrification des paliers, notamment en cas d'interruption d'huile. Cependant, les quantités d'huile disponibles sont très faibles et ne sont pas suffisantes pour lubrifier et refroidir les paliers en particulier ceux qui guident les rotors à hautes vitesses. Des systèmes de lubrification d'urgence (utilisant de l'huile à base de glycol) peuvent être utilisés mais présentent l'inconvénient d'être lourds et encombrants. De plus, cette huile permet d'assurer la lubrification des contacts mais reste très largement insuffisante pour refroidir les rotors à hautes vitesses, qui peuvent atteindre des températures importantes en cas d'interruption de la lubrification.

Ainsi, sur les lignes hautes vitesses d'une turbomachine, une interruption d'huile de longue durée conduit à arrêter rapidement la turbomachine pour prévenir une défaillance rapide. Cependant, l'arrêt de certains équipements accouplés au générateur de gaz n'est pas toujours techniquement possible en vol.

On a déjà proposé d'équiper l'équipement d'un système de refroidissement de ses paliers. Le système de refroidissement est configuré pour refroidir la bague externe uniquement du palier à roulement. Ce système de refroidissement est actuellement relié au circuit de lubrification de l'équipement, comme décrit dans le document FR-A1-3 101 684 précité. Le système de refroidissement permet de refroidir en continu le palier mais ne permet pas d'assurer ce refroidissement en cas de dysfonctionnement du circuit de lubrification de l'équipement. Le fonctionnement du système de refroidissement dépend donc du fonctionnement du circuit de lubrification, ce qui est problématique et ne permet pas d'assurer un refroidissement de sécurité du palier afin d'éviter que sa température ne soit trop importante. Par ailleurs, cette solution permet de refroidir des paliers de guidage de rotors à basses et moyennes vitesses (de 400 à 20.000 tours minutes) mais ne sont pas adaptés pour le refroidissement de rotors à hautes vitesses.

Il existe donc un besoin de trouver une solution pour assurer le refroidissement du ou des paliers à roulement d'un rotor de l'équipement, même lors d'un dysfonctionnement du circuit de lubrification de cet équipement.

### Résumé de l'invention

La présente invention propose une turbomachine d'aéronef, cette turbomachine comportant :
- un générateur de gaz comportant au moins un compresseur, une chambre de combustion, et au moins une turbine, le générateur de gaz comportant un arbre de sortie ainsi qu'un premier circuit de lubrification,
- un équipement accouplé à l'arbre de sortie du générateur de gaz et comportant un rotor qui est guidé en rotation par au moins un palier à roulement, l'équipement comportant un second circuit de lubrification qui est indépendant dudit premier circuit de lubrification et qui est configuré pour lubrifier ledit palier à roulement, l'équipement comportant en outre un système de refroidissement dudit palier à roulement, le système de refroidissement étant configuré pour assurer une circulation d'huile au niveau d'au moins une bague dudit palier à roulement,
caractérisée en ce que le système de refroidissement est indépendant dudit second circuit de lubrification et est relié audit premier circuit de lubrification. Dans la présente demande, on entend par des circuits indépendants, des circuits qui n'ont pas de communication fluidique directe entre eux, c'est-à-dire que les circuits ne sont pas reliés l'un à l'autre. Il n'y a donc pas de vanne ou conduite commune entre ces circuits. De préférence, les circuits ne partagent même pas un même réservoir de fluide.

Contrairement à la technique antérieure dans laquelle le système de refroidissement d'un palier de l'équipement est indépendant du circuit de lubrification du générateur de gaz, et est relié au circuit de lubrification de l'équipement, le système de refroidissement est ici indépendant du circuit de lubrification de l'équipement et est relié au circuit de lubrification du générateur de gaz. On comprend donc que le refroidissement du palier de l'équipement peut être assuré tant que le circuit de lubrification du générateur de gaz est fonctionnel. Le fonctionnement du refroidissement du palier de l'équipement est donc indépendant du fonctionnement du circuit de lubrification de l'équipement. Même en cas de dysfonctionnement du circuit de lubrification de l'équipement, le système de refroidissement du palier de l'équipement peut continuer d'être alimenté en huile et de refroidir le palier de l'équipement.

Le système de refroidissement est configuré pour assurer le refroidissement du ou des paliers de guidage du rotor, même si ce dernier tourne à des hautes vitesses supérieures ou égales à 25.000 tours/minutes. La configuration du système de refroidissement n'est pas contrainte par les capacités du second circuit de lubrification et bénéficie des capacités du premier circuit de lubrification, les capacités du premier circuit étant en général supérieures à celles du second circuit. On entend par capacités, notamment le débit et le volume d'huile disponibles pour assurer le refroidissement.

L'équipement au sens de l'invention est de préférence choisi parmi une machine électrique, une boîte d'engrenages ou de vitesse, un réducteur de vitesse et une boîte de transmission. Il peut par exemple s'agir d'un réducteur de vitesse du type RGB (acronyme de l'anglais *Reduction GearBox),* d'une boîte de transmission du type BTP ou BTI (acronyme de *Boîte de Transmission Principale* ou *Intermédiaire*), d'une boite de vitesse de propulsion du type PGB (acronyme de l'anglais *Propeller GearBox*).

La turbomachine peut comprendre une ou plusieurs des caractéristiques suivantes, prises seules ou en combinaison les unes avec les autres :
- le système de refroidissement est configuré pour assurer une circulation d'huile au niveau d'une bague externe dudit palier à roulement ;
- le système de refroidissement est un système de refroidissement permanent et est configuré pour assurer une circulation d'huile en continu au niveau de la ou des bagues dudit palier à roulement ;
- le système de refroidissement est un système de refroidissement de sécurité et est configuré pour être activé pour assurer une circulation d'huile au niveau de la ou des bagues dudit palier à roulement ;
- le système de refroidissement est relié à un système d'activation qui est choisi parmi un système électrique, un système thermostatique, et un système thermofusible ;
- le système de refroidissement comprend des canalisations formées dans un carter externe de l'équipement ;
- les canalisations comprennent au moins une canalisation de refroidissement s'étendant autour de la ou des bagues du palier à roulement, ladite au moins une canalisation de refroidissement étant reliée à la fois à au moins une canalisation d'amenée d'huile depuis le premier circuit de lubrification, et à au moins une canalisation de retour d'huile jusqu'au premier circuit de lubrification ;
- la bague externe dudit palier à roulement est intégrée dans ledit carter ou est montée dans ledit carter ;
- ledit carter est fixé au générateur de gaz ;
- l'équipement est choisi parmi une machine électrique, une boîte d'engrenages ou de vitesse, un réducteur de vitesse et une boîte de transmission ;
- la ou chaque bague du palier est en alliage métallique ou en céramique ;
- chacun desdits premier et second circuits de lubrification comprend un réservoir d'huile dédié et/ou une pompe dédiée ;
- le réservoir d'huile du second circuit de lubrification est un réservoir gravitaire ;
- la pompe du second circuit de lubrification est configurée pour alimenter des gicleurs d'huile et pour remplir le réservoir gravitaire.

### Brève description des figures

D'autres caractéristiques et avantages de l'invention apparaitront au cours de la lecture de la description détaillée qui va suivre pour la compréhension de laquelle on se reportera aux dessins annexés dans lesquels :
[Fig.1] la figure 1 est une vue schématique en coupe axiale d'une turbomachine d'aéronef, et en particulier d'un générateur de gaz et d'un équipement de cette turbomachine ;
[Fig.2] la figure 2 est une vue à plus grande échelle d'une partie de la figure 1 et montre un rotor de l'équipement guidé par des paliers à roulement ;
[Fig.3] la figure 3 est une vue en perspective d'une partie d'un équipement destiné à être accouplé à un arbre de sortie d'un générateur de gaz, et montre un système de refroidissement de paliers de guidage de son rotor ;
[Fig.4] la figure 4 est une vue schématique en perspective et en coupe axiale de la partie d'équipement de la figure 3 ;
[Fig.5] la figure 5 est une vue schématique partielle en coupe axiale d'une turbomachine d'aéronef, similaire à la figure 1, et montre une variante de réalisation de l'invention.

### Description détaillée de l'invention

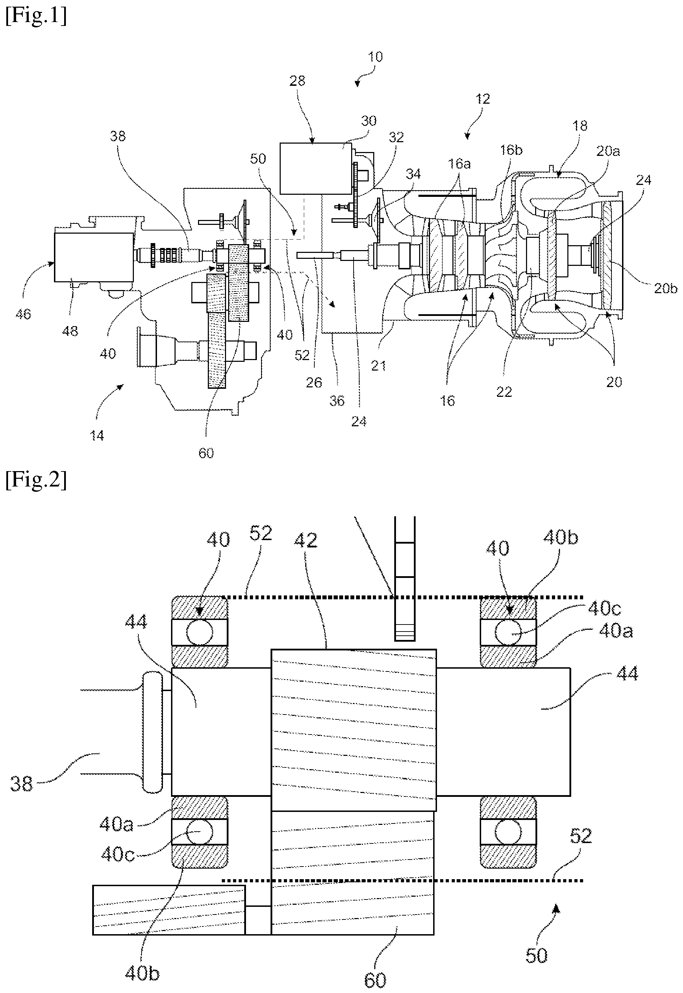

La figure 1 montre une turbomachine 10 pour un aéronef, et en particulier pour un hélicoptère. La turbomachine 10 comprend pour l'essentiel deux parties ou modules à savoir un générateur de gaz 12, à droite sur le dessin, et un équipement 14, à gauche sur le dessin.

Le générateur de gaz 12 comprend de manière classique, de l'amont vers l'aval (de gauche vers la droite sur le dessin), par référence à l'écoulement des gaz, un ou plusieurs compresseurs 16, une chambre de combustion 18 et une ou plusieurs turbines 20.

Le générateur de gaz 12 comprend une entrée d'air 21, ici annulaire, qui alimente en air les compresseurs 16. Dans l'exemple représenté, le générateur de gaz 12 comprend un compresseur axial 16a à deux étages de compression suivi d'un compresseur centrifuge 16b. L'air est comprimé dans les compresseurs 16 puis mélangé à du carburant et brûlé dans la chambre de combustion 18. Les gaz de combustion qui sortent de la chambre 18 alimentent une première turbine 20a dont le rotor est relié par un arbre 22 commun au rotor des compresseurs 16. Les gaz de combustion sont détendus dans la première turbine 20a puis dans une turbine libre 20b dont l'arbre 24 s'étend coaxialement à l'intérieur de l'arbre 22, jusqu'à l'extrémité amont du générateur de gaz 10. L'arbre 24 comprend une extrémité amont qui est située à l'extérieur du générateur de gaz 10 et forme un arbre de sortie 26 destiné à être accouplé à l'équipement 14.

Le générateur de gaz 12 comprend un circuit de lubrification 28 notamment des paliers à roulement (non représentés) de guidage des arbres 24 et 22. Ce circuit de lubrification 28 comprend par exemple un réservoir, une pompe 30, et des gicleurs d'huile sur les paliers à roulement. La pompe 30 est par exemple une pompe qui comprend un rotor relié par un engrenage 32 à un dispositif 34 de prélèvement de puissance sur l'arbre 22.

Le circuit de lubrification 28 du générateur de gaz 12 est situé dans le générateur de gaz 12 et en particulier à l'intérieur d'un carter externe 36 du générateur de gaz.

L'équipement 14 est de préférence choisi parmi une machine électrique, une boîte d'engrenages ou de vitesse, un réducteur de vitesse et une boîte de transmission. Il peut par exemple s'agir d'un réducteur de vitesse du type RGB (acronyme de l'anglais *Reduction GearBox*), d'une boîte de transmission du type BTP ou BTI (acronyme de *Boîte de Transmission Principale* ou *Intermédiaire*), d'une boite de vitesse de propulsion du type PGB (acronyme de l'anglais *Propeller GearBox*).

L'équipement 14 comprend un rotor 38 qui est accouplé, par exemple par des cannelures, à l'arbre de sortie 26 du générateur de gaz 12. Le rotor 38 est guidé en rotation par un ou plusieurs paliers à roulements 40 qui sont mieux visibles à la figure 2. Le rotor 38 comprend par exemple une denture externe hélicoïdale 42 située entre deux surfaces cylindriques externes 44. Les paliers 40 sont situés respectivement sur les deux surfaces 44 et comprennent des bagues internes 40a montées sur ces surfaces 44 et solidaires et rotation du rotor 38. Les paliers 40 comportant en outre des bagues externes 40b portées par un stator, ainsi que des éléments roulants 40c disposés entre les bagues internes et externes. Les bagues 40a, 40b des paliers 40 sont typiquement en alliage métallique ou en céramique.

L'équipement 14 comprend un circuit de lubrification 46 notamment des paliers à roulement 40. Ce circuit de lubrification 46 comprend par exemple un réservoir, une pompe 48, et des gicleurs d'huile sur les paliers à roulement 40. La pompe 48 est par exemple une pompe qui comprend un rotor accouplé à une extrémité du rotor 38.

La turbomachine 10 comprend en outre un système 50 de refroidissement des paliers à roulement 40 et en particulier de leurs bagues externes 40b. Ce système de refroidissement 50 est indépendant du circuit de lubrification 46, c'est-à-dire qu'il n'est pas relié à ce circuit 46, et est au contraire relié au circuit de lubrification 28 du générateur de gaz 12.

Le système de refroidissement 50 est configuré pour assurer une circulation d'huile au niveau des bagues externes 40b des paliers à roulement 40.

Les figures 1 et 2 montrent de manière très schématique des canalisations 52 (sous forme de traits pointillés) qui assurent l'amenée d'huile depuis le circuit de lubrification 28 jusqu'aux paliers 40, ainsi que l'évacuation de cette huile qui peut être réinjectée dans le circuit de lubrification 28.

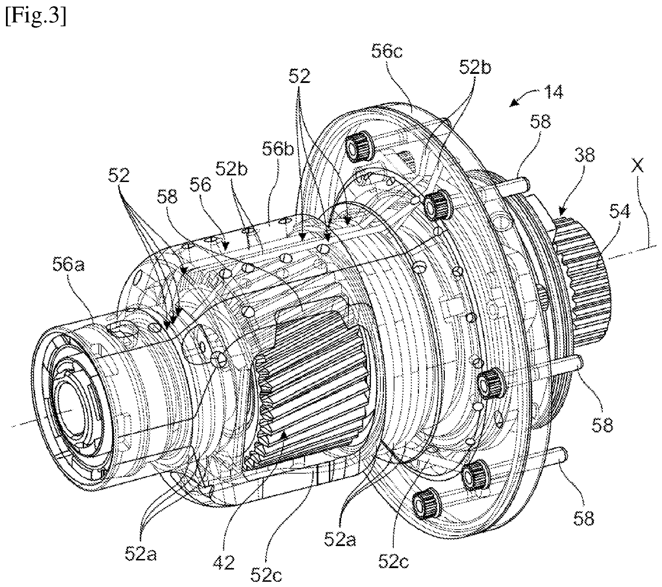

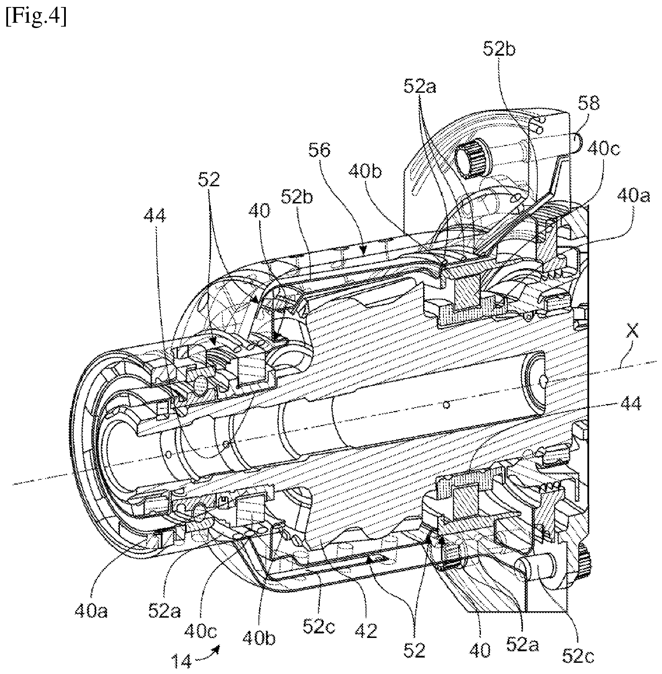

Les figures 3 et 4 montrent un exemple plus concret de réalisation de l'invention. Le rotor 38 de l'équipement 14 comprend à une extrémité des cannelures externes 54 d'accouplement à l'arbre de sortie 26 (qui comprend des cannelures internes complémentaires). Le rotor 38 comprend en outre la denture 42 et les surfaces 44 sur lesquelles sont montées les bagues internes 40a des paliers 40. La figure 4 permet de constater que l'un des paliers 40, à gauche sur le dessin, est à billes et sa bague externe 40b est intégrée à un carter 54 de l'équipement 14. L'autre palier 40, à droite sur le dessin, est à rouleaux et sa bague externe 40b est montée dans le carter 56 de l'équipement 14. Le carter 56 forme ainsi une cage ou un support pour les paliers 40.

Les canalisations 52 précitées du système de refroidissement 50 sont ici formées dans le carter 56. Ce carter 56 a une forme générale de révolution autour de l'axe X de rotation du rotor 38. Le carter 56 épouse la forme générale du rotor 38 et comprend par exemple deux portions cylindriques 56a, 56b adjacentes et une bride annulaire 56c radialement externe.

La bride annulaire 56c est située à une extrémité axiale du carter 56, située du côté des cannelures 54 du rotor 38, et est configurée pour être fixée au carter 36 du générateur de gaz 12, et par exemple à une bride annulaire correspondante du générateur de gaz. Pour cela, la bride 56c comprend une rangée annulaire d'orifices de passage de vis 58 fixées sur le carter 36 du générateur de gaz 12.

La portion cylindrique 56b de plus grand diamètre s'étend autour de la denture 42 et de la surface 44 de réception du palier à rouleaux 40, et depuis la bride 56c jusqu'à la portion cylindrique 56a de plus petit diamètre. Cette portion 56a s'étend autour de la surface 44 de réception du palier à billes 40.

La portion cylindrique 56b comprend une lumière 58 qui permet de découvrir une partie de la denture 42, et de permettre son engrènement avec un pignon 60 ou autre de l'équipement (cf. figures 1 et 2).

Parmi les canalisations 52 du système de refroidissement 50, il y a des canalisations 52a qui ont une forme générale annulaire et s'étendent autour des bagues externes 40b, lorsque ces dernières sont rapportées dans le carter 56, ou dans les bagues externes 40b, lorsque ces dernières sont intégrées au carter 56.

Les canalisations 52a ont pour principale fonction la circulation d'huile de refroidissement au plus près des paliers 40 en vue de leur refroidissement. Il peut y avoir une, deux ou trois, voire plus, canalisations annulaires 52a autour de chacun des paliers 40. Ces canalisations 52a ont globalement chacune les mêmes dimensions et en particulier les mêmes diamètres mesurés par rapport à l'axe X.

Les canalisations 52 comprennent en outre des canalisations 52b d'amenée d'huile qui sont formées dans le carter 56. Chacune de ces canalisations 52b est reliée à une ou plusieurs des canalisations 52a et comprend une extrémité qui débouche au niveau de la bride 56c pour être raccordée fluidiquement avec une extrémité correspondante du circuit de lubrification 28 du générateur de gaz 12. Le circuit de lubrification 28 du générateur de gaz 12 peut également comprendre une extrémité qui débouche sur la bride de son carter 36 de façon à ce que l'assemblage et la fixation des brides assurent la communication fluidique entre le circuit de lubrification 28 et le système de refroidissement 50. Les canalisations 52 comprennent en outre des canalisations 52c d'évacuation d'huile qui sont formées dans le carter 56. Chacune de ces canalisations 52c est reliée à une ou plusieurs des canalisations 52a et comprend une extrémité qui débouche au niveau de la bride 56c pour être raccordée fluidiquement avec une extrémité correspondante du circuit de lubrification 28, de la même façon que les canalisations 52b.

En variante, le système de refroidissement 50 pourrait être configuré pour refroidir les bagues internes 40a seulement des paliers 40, ou bien les bagues externes 40b et internes 40a des paliers 40.

De manière générale, les canalisations 52 du système de refroidissement 50 peuvent avoir n'importe quelle forme générale et par exemple une forme en serpentin, en zigzag, et avec n'importe quelle forme en section et par exemple ronde, ovale, etc.

Le carter 56 représenté dans les dessins peut être réalisé par fabrication additive bien que ceci ne soit pas limitatif.

Selon un mode de réalisation, le système de refroidissement 50 peut être configuré pour assurer une circulation d'huile en continu au niveau des bagues 40b des paliers 40.

En variante, le système de refroidissement 50 est un système de refroidissement de sécurité et est configuré pour être activé pour assurer une circulation d'huile au niveau des bagues 40b des paliers 40. Le système de refroidissement 50 a alors deux états distincts : un premier état désactivé pour lequel il n'y a pas de circulation d'huile dans les canalisations 52 et donc pas de refroidissement des paliers 40 par échange thermique avec l'huile, et un second état activé pour lequel de l'huile circule dans les canalisations 52 pour refroidir les paliers 40.

Le système de refroidissement 50 est alors relié à un système d'activation qui est choisi parmi un système électrique, un système thermostatique, et un système thermofusible. Ce système d'activation comprend par exemple une ou plusieurs électrovannes placées sur le circuit et commandées par un élément électrique, thermostatique ou thermofusible. L'électrovanne peut être destinée à être activée manuellement ou automatiquement. Un pilote de l'aéronef peut par exemple commander l'activation du système lorsqu'un voyant de la cabine de pilotage signale une anomalie, ce voyant étant par exemple relatif à la pression d'huile dans le circuit de lubrification 46 de l'équipement 14. Le système d'activation peut être associé à un capteur de température pour surveiller la température des paliers et activer le système de refroidissement lorsque cette température dépasse un seuil prédéterminé.

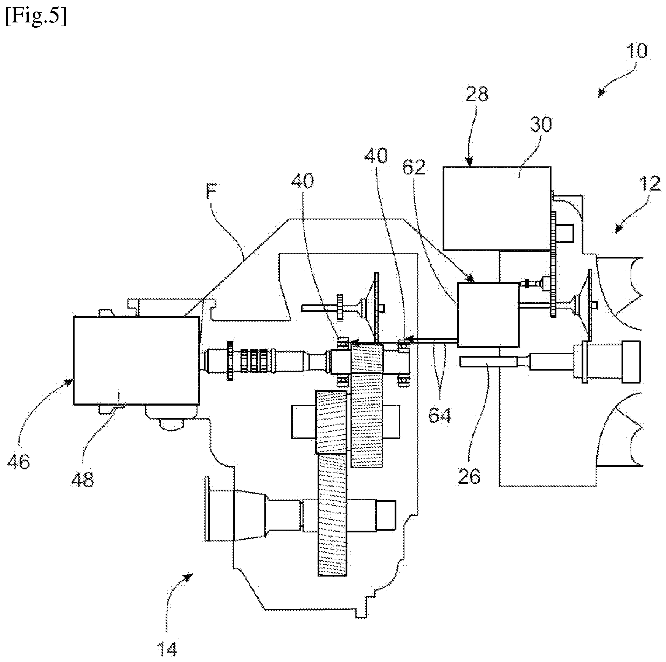

La figure 5 montre une autre variante de réalisation de l'invention dans laquelle le circuit de lubrification 46 de l'équipement 14 comprend un réservoir gravitaire 62, c'est-à-dire un réservoir depuis lequel de l'huile s'écoule par gravité jusqu'aux paliers 40 notamment. Une fois que cette huile a lubrifié les paliers, elle est récupérée et peut être renvoyée vers le réservoir gravitaire 62 à l'aide de la pompe 48 du circuit 46 (cf. flèche F). Cette pompe 48 peut également être utilisée pour alimenter des gicleurs d'huile vers les paliers 40 et vers d'autres éléments à lubrifier de l'équipement 14. L'huile apportée par le réservoir gravitaire 62 permet alors de réaliser une lubrification parallèle des paliers 40, en plus de la lubrification principale assurée par les gicleurs d'huile (reliés au réservoir 62 ou à un autre réservoir du circuit 46). Le mode de réalisation de la figure 5 comprend en plus un système de refroidissement 50 tel que décrit dans ce qui précède.

Comme c'est visible dans l'exemple représenté, le réservoir gravitaire 62 peut être monté dans le générateur de gaz 12 et en particulier dans son carter 36. Il est alors relié à des moyens de lubrification des paliers par une ou plusieurs canalisations 64, qui comprennent une extrémité haute reliée au réservoir 62 et une extrémité basse reliée à ces moyens de lubrification pour l'écoulement gravitaire de l'huile du réservoir 62 jusqu'aux paliers 40.

L'invention propose ainsi de faire cheminer de l'huile de lubrification du générateur de gaz 12 dans l'équipement 14 pour refroidir des paliers 40 de cet équipement. Les calories générées par les paliers sont alors évacuées par l'huile de lubrification qui est refroidie ensuite au sein du générateur de gaz 12.

## Revendications

1. Turbomachine (10) d'aéronef, cette turbomachine comportant :
- un générateur de gaz (12) comportant au moins un compresseur (16), une chambre de combustion (18), et au moins une turbine (20), le générateur de gaz (12) comportant un arbre de sortie (26) ainsi qu'un premier circuit de lubrification (28),
- un équipement (14) accouplé à l'arbre de sortie (26) du générateur de gaz (12) et comportant un rotor (38) qui est guidé en rotation par au moins un palier à roulement (40), l'équipement (14) comportant un second circuit de lubrification (46) qui est indépendant dudit premier circuit de lubrification (28) et qui est configuré pour lubrifier ledit palier à roulement (40), l'équipement (14) comportant en outre un système (50) de refroidissement dudit palier à roulement (40), le système de refroidissement (50) étant configuré pour assurer une circulation d'huile au niveau d'au moins une bague (40b) dudit palier à roulement (40),
**caractérisée en ce que** le système de refroidissement (50) est indépendant dudit second circuit de lubrification (46) et est relié audit premier circuit de lubrification (28).

2. Turbomachine (10) selon la revendication 1, dans laquelle le système de refroidissement (50) est configuré pour assurer une circulation d'huile au niveau d'une bague externe (40b) dudit palier à roulement (40).

3. Turbomachine (10) selon la revendication 1 ou 2, dans laquelle le système de refroidissement (50) est un système de refroidissement permanent et est configuré pour assurer une circulation d'huile en continu au niveau de la ou des bagues (40b) dudit palier à roulement (40).

4. Turbomachine (10) selon la revendication 1 ou 2, dans laquelle le système de refroidissement (50) est un système de refroidissement de sécurité et est configuré pour être activé pour assurer une circulation d'huile au niveau de la ou des bagues (40b) dudit palier à roulement (40).

5. Turbomachine (10) selon la revendication précédente, dans laquelle le système de refroidissement (50) est relié à un système d'activation qui est choisi parmi un système électrique, un système thermostatique, et un système thermofusible.

6. Turbomachine (10) selon l'une des revendications précédentes, dans laquelle le système de refroidissement (50) comprend des canalisations (52) formées dans un carter externe de l'équipement.

7. Turbomachine (10) selon la revendication 6, dans laquelle les canalisations (52) comprennent au moins une canalisation de refroidissement s'étendant autour de la ou des bagues (40b) du palier à roulement (40), ladite au moins une canalisation de refroidissement étant reliée à la fois à au moins une canalisation d'amenée d'huile depuis le premier circuit de lubrification (28), et à au moins une canalisation de retour d'huile jusqu'au premier circuit de lubrification (28).

8. Turbomachine (10) selon la revendication 6 ou 7 prise en combinaison avec la revendication 2, dans laquelle la bague externe (40b) dudit palier à roulement (40) est intégrée dans ledit carter ou est montée dans ledit carter.

9. Turbomachine (10) selon l'une des revendications 6 à 8, dans laquelle ledit carter est fixé au générateur de gaz (12).

10. Turbomachine (10) selon l'une des revendications précédentes, dans laquelle l'équipement (14) est choisi parmi une machine électrique, une boîte d'engrenages ou de vitesse, un réducteur de vitesse et une boîte de transmission.

11. Turbomachine (10) selon l'une des revendications précédentes, dans laquelle la ou chaque bague (40b) dudit palier à roulement (40) est en alliage métallique ou en céramique.

12. Turbomachine (10) selon l'une des revendications précédentes, dans laquelle chacun desdits premier et second circuits de lubrification (28, 46) comprend un réservoir d'huile (62) dédié.

13. Turbomachine (10) selon la revendication précédente, dans laquelle le réservoir d'huile du second circuit de lubrification (46) est un réservoir gravitaire (62).

14. Turbomachine (10) selon l'une des revendications précédentes, dans laquelle chacun desdits premier et second circuits de lubrification comprend une pompe (30, 48) dédiée.

15. Turbomachine (10) selon l'ensemble des revendications 13 et 14, dans laquelle la pompe (48) du second circuit de lubrification (46) est configurée pour alimenter des gicleurs d'huile et pour remplir le réservoir gravitaire (62).

## Patentansprüche

1. Turbotriebwerk (10) eines Luftfahrzeugs, wobei dieses Turbotriebwerk umfasst:
- ein Gasgenerator (12), der mindestens einen Kompressor (16), eine Brennkammer (18) und mindestens eine Turbine (20) umfasst, wobei der Gasgenerator (12) eine Abtriebswelle (26) sowie einen ersten Schmierkreislauf (28) umfasst,
- eine Ausrüstung (14), die mit der Abtriebswelle (26) des Gasgenerators (12) gekoppelt ist und einen Rotor (38) umfasst, der durch mindestens ein Wälzlager (40) drehbar geführt wird, wobei die Ausrüstung (14) einen zweiten Schmierkreislauf (46) umfasst, der unabhängig von dem ersten Schmierkreislauf (28) ist und der zum Schmieren des Wälzlagers (40) konfiguriert ist, wobei die Ausrüstung (14) weiter ein Kühlsystem (50) des Wälzlagers (40) umfasst, wobei das Kühlsystem (50) zum Sicherstellen einer Ölzirkulation an mindestens einem Ring (40b) des Wälzlagers (40) konfiguriert ist,
**dadurch gekennzeichnet, dass** das Kühlsystem (50) unabhängig von dem zweiten Schmierkreislauf (46) ist und mit dem ersten Schmierkreislauf (28) verbunden ist.

2. Turbotriebwerk (10) nach Anspruch 1, wobei das Kühlsystem (50) konfiguriert ist, um eine Ölzirkulation an einem Außenring (40b) des Wälzlagers (40) sicherzustellen.

3. Turbotriebwerk (10) nach Anspruch 1 oder 2, wobei das Kühlsystem (50) ein Dauerkühlsystem ist und konfiguriert ist, um eine kontinuierliche Ölzirkulation an dem oder den Ringen (40b) des Wälzlagers (40) sicherzustellen.

4. Turbotriebwerk (10) nach Anspruch 1 oder 2, wobei das Kühlsystem (50) ein Sicherheitskühlsystem ist und konfiguriert ist, um aktiviert zu werden, um eine Ölzirkulation an dem oder den Ringen (40b) des Wälzlagers (40) sicherzustellen.

5. Turbotriebwerk (10) nach dem vorstehenden Anspruch, wobei das Kühlsystem (50) mit einem Aktivierungssystem verbunden ist, das aus einem elektrischen System, einem thermostatischen System und einem Heissschmelzsystem ausgewählt ist.

6. Turbotriebwerk (10) nach einem der vorstehenden Ansprüche, wobei das Kühlsystem (50) Kanäle (52) umfasst, die in einem Außengehäuse der Ausrüstung ausgebildet sind.

7. Turbotriebwerk (10) nach Anspruch 6, wobei die Kanäle (52) mindestens einen Kühlkanal umfassen, der sich um den oder die Ringe (40b) des Wälzlagers (40) erstreckt, wobei der mindestens eine Kühlkanal sowohl mit mindestens einem Ölzufuhrkanal vom ersten Schmierkreislauf (28) als auch mit mindestens einem Ölrücklaufkanal zum ersten Schmierkreislauf (28) verbunden ist.

8. Turbotriebwerk (10) nach Anspruch 6 oder 7 in Kombination mit Anspruch 2, wobei der Außenring (40b) des Wälzlagers (40) in das Gehäuse integriert oder in dem Gehäuse gelagert ist.

9. Turbotriebwerk (10) nach einem der Ansprüche 6 bis 8, wobei das Gehäuse am Gasgenerator (12) befestigt ist.

10. Turbotriebwerk (10) nach einem der vorstehenden Ansprüche, wobei die Ausrüstung (14) aus einer elektrischen Maschine, einem Zahnrad- oder Schaltgetriebe, einem Drehzahlminderer und einem Übertragungsgetriebe ausgewählt ist.

11. Turbotriebwerk (10) nach einem der vorstehenden Ansprüche, wobei der oder jeder Ring (40b) des Wälzlagers (40) aus einer Metalllegierung oder aus Keramik besteht.

12. Turbotriebwerk (10) nach einem der vorstehenden Ansprüche, wobei sowohl der erste als auch der zweite Schmierkreislauf (28, 46) einen eigenen Ölbehälter (62) umfasst.

13. Turbotriebwerk (10) nach dem vorstehenden Anspruch, wobei der Ölbehälter des zweiten Schmierkreislaufs (46) ein Schwerkraftbehälter (62) ist.

14. Turbotriebwerk (10) nach einem der vorstehenden Ansprüche, wobei sowohl der erste als auch der zweite Schmierkreislauf eine eigene Pumpe (30, 48) umfasst.

15. Turbotriebwerk (10) nach den Ansprüchen 13 und 14, wobei die Pumpe (48) des zweiten Schmierkreislaufs (46) konfiguriert ist, um Öldüsen zu versorgen und den Schwerkraftbehälter (62) zu befüllen.

## Claims

1. An aircraft turbomachine (10), this turbomachine comprising:
- a gas generator (12) comprising at least one compressor (16), a combustion chamber (18), and at least one turbine (20), the gas generator (12) comprising an output shaft (26) and a first lubricating circuit (28),
- an equipment (14) coupled to the output shaft (26) of the gas generator (12) and comprising a rotor (38) which is rotationally guided by at least one rolling bearing (40), the equipment (14) comprising a second lubricating circuit (46) which is independent of said first lubricating circuit (28) and which is configured to lubricate said rolling bearing (40), the equipment (14) further comprising a system (50) for cooling said rolling bearing (40), the cooling system (50) being configured to ensure a circulation of oil in the region of at least one ring (40b) of said rolling bearing (40),
**characterised in that** the cooling system (50) is independent of said second lubricating circuit (46) and is connected to said first lubricating circuit (28).

2. The turbomachine (10) according to claim 1, wherein the cooling system (50) is configured to ensure a circulation of oil in the region of an external ring (40b) of said rolling bearing (40).

3. The turbomachine (10) according to claim 1 or 2, wherein the cooling system (50) is a permanent cooling system and is configured to ensure a continuous circulation of oil in the region of the ring(s) (40b) of said rolling bearing (40).

4. The turbomachine (10) according to claim 1 or 2, wherein the cooling system (50) is a safety cooling system and is configured to be activated to ensure a circulation of oil in the region of the ring(s) (40b) of said rolling bearing (40).

5. The turbomachine (10) according to the preceding claim, wherein the cooling system (50) is connected to an activation system which is chosen from an electrical system, a thermostatic system and a hot-melt system.

6. The turbomachine (10) according to any one of the preceding claims, wherein the cooling system (50) comprises pipes (52) formed in an external casing of the equipment.

7. The turbomachine (10) according to claim 6, wherein the pipes (52) comprise at least one cooling pipe extending around the ring(s) (40b) of the rolling bearing (40), said at least one cooling pipe being connected both to at least one feed oil pipe from the first lubricating circuit (28), and to at least one oil return pipe to the first lubricating circuit (28).

8. The turbomachine (10) according to claim 6 or 7 taken in combination with claim 2, wherein the external ring (40b) of said rolling bearing (40) is integrated into said casing or is mounted in said casing.

9. The turbomachine (10) according to one of claims 6 to 8, wherein said casing is fixed to the gas generator (12).

10. The turbomachine (10) according to one of the preceding claims, wherein the equipment (14) is chosen from an electrical machine, a gear or speed box, a speed reduction gear and a transmission box.

11. The turbomachine (10) according to one of the preceding claims, wherein said or each ring (40b) of said rolling bearing (40) is made of a metal alloy or ceramic.

12. The turbomachine (10) according to any one of the preceding claims, wherein each of said first and second lubricating circuits (28, 46) comprises a dedicated oil tank (62).

13. The turbomachine (10) according to the preceding claim, wherein the oil tank of the second lubricating circuit (46) is a gravity tank (62).

14. The turbomachine (10) according to any one of the preceding claims, wherein each of said first and second lubricating circuits comprises a dedicated pump (30, 48).

15. The turbomachine (10) according to all of claims 13 and 14, wherein the pump (48) of the second lubricating circuit (46) is configured to supply oil nozzles and to fill the gravity tank (62).
